# EUROPÄISCHE PATENTSCHRIFT

(11) **EP 1 221 559 B1**
(45) Veröffentlichungstag und Bekanntmachung des Hinweises auf die Patenterteilung: **21.06.2006**
(21) Anmeldenummer: 01129927.8
(22) Anmeldetag: 17.12.2001
(51) Int. Cl.: F16F 9/32, F16F 9/36, F16F 9/48

(54) **Brems- und Dämpfeinrichtung, insbesondere für bewegbare Möbelteile**
Braking and damping device, in particular for moving furniture parts
Dispositif de freinage et amortissage, en particulier pour pièces de meuble sujettes à des mouvements

(30) Priorität: 09.01.2001 AT 142001 U; 12.04.2001 AT 5912001
(43) Veröffentlichungstag der Anmeldung: 10.07.2002
(73) Patentinhaber: Julius Blum GmbH, 6973 Höchst (AT)
(72) Erfinder: Fitz, Helmut, 6890 Lustenau (AT); Brüstle, Klaus, 6973 Höchst (AT)
(74) Vertreter: Torggler, Paul Norbert

(56) Entgegenhaltungen:
- DE-A- 1 809 968
- FR-A- 1 316 622
- US-A- 2 646 859
- US-A- 2 705 634
- US-A- 3 628 637
- US-A- 3 806 105
- US-A- 4 166 522
- US-A- 5 257 680
- US-A- 5 595 268
- US-A- 5 720 369
- PATENT ABSTRACTS OF JAPAN vol. 004, no. 020 (M-092), 19. Februar 1980 (1980-02-19) -& JP 54 158579 A (BRIDGESTONE CORP), 14. Dezember 1979 (1979-12-14)

## Beschreibung

Die Erfindung bezieht sich auf eine Brems- und Dämpfeinrichtung, insbesondere für bewegbare Möbelteile nach dem oberbegriff von Anspruch 1.

Eine derartige Brems- und Dämpfeinrichtung ist in der DE-A-1 809 968 beschrieben.

Eine weitere Brems- und Dämpfeinrichtung ist in der US-A-3 806 105 beschrieben. Die Brems- und Dämpfeinrichtung weist einen Kolben mit Spreizelementen auf, die sich beim Dämpfvorgang radial nach außen bewegen und einen Bremskörper an die Zylinderwand drücken.

Bei modernen Möbeln kommen in vermehrtem Maße Brems- und Dämpfeinrichtungen zum Einsatz, die verhindern, daß eine zu kräftig zugeschlagene Möbeltüre oder eine mit zuviel Kraft in den Möbelkorpus eingeschobene Schublade an der Korpusstirnwand anschlägt. Die ältesten Dämpfeinrichtungen wurden von einfachen Gummipuffern gebildet. In neuerer Zeit kommen pneumatische und hydraulische Brems- und Dämpfeinrichtungen zum Einsatz.

Bei Schubladen werden sie vorzugsweise mit einer Einzugsvorrichtung kombiniert. Auch bei Türen oder Klappen sind in vielen Fällen Scharniere mit einem Schließmechanismus vorgesehen, die zusammen mit dem Dämpfer für einen optimalen Bewegungsablauf sorgen.

Bei Fluiddämpfern, das heißt pneumatischen oder hydraulischen Dämpfern mit einem linearverfahrbaren Kolben hat es sich gezeigt, daß im Falle hoher Geschwindigkeiten oder großen Massen die Dämpfwirkung des Fluids nicht ausreicht, um den bewegten Möbelteil ausreichend abzubremsen.

In der US-PS 4877226 wurde daher ein Fluiddämpfer mit linearverfahrbaren Kolben vorgeschlagen, dem sich der Kolben während des Dämpfungsvorgangs radial ausdehnt und an die Zylinderwand gedrückt wird, sodaß zusätzlich zur Dämpfung durch das Fluid eine Reibungsdämpfung zwischen Zylinder und Kolben auftritt.

Aufgabe der Erfindung ist es, eine pneumatische oder hydraulische Brems- und Dämpfeinrichtung der eingangs erwähnten Art zu schaffen, bei der eine bessere Abdichtung zwischen dem Kolben und der Zylinderwand erreicht wird und wobei auch eine Rückfederung beim Bremsen durch den im Zylinder entstehenden Luftpolster bzw. Fluidpolster vermieden wird.

Die erfindungsgemäße Aufgabe wird dadurch gelöst, daß zwischen den beiden Kolben ein elastisch verformbarer Dichtungskörper angeordnet ist, der bei der Dämpfung zwischen den beiden Kolben zusammengedrückt, dabei verformt und an die Zylinderwand gedrückt wird, wodurch zusätzlich zu einer Dämpfung durch ein Fluid eine Dämpfung durch Reibung erfolgt.

Vorteilhaft ist vorgesehen, daß der erste Kolben, der über eine Kolbenstange linear verschiebbar ist, einen stirnseitig offenen Hohlraum aufweist, in den der zweite Kolben eingesetzt ist, wobei der zweite Kolben im ersten Kolben frei verschiebbar gelagert ist und am äußeren Mantel einen Ringvorsprung aufweist, der sich vor dem ersten Kolben befindet, und zwischen dem Ringvorsprung und der Stirnfläche des ersten Kolbens der als Dichtring ausgebildete Dichtungskörper angeordnet ist.

Vorteilhaft ist weiters vorgesehen, daß im Hohlraum des ersten Kolbens Anschläge vorgesehen sind, die den Verschiebeweg des zweiten Kolbens begrenzen.

Ein Ausführungsbeispiel der Erfindung sieht vor, daß zwischen dem Boden des Hohlraumes des ersten Kolbens und der Rückseite des zweiten Kolbens mindestens ein elastischer Abstandhalter vorgesehen ist.

Ein weiteres Ausführungsbeispiel der Erfindung sieht vor, daß der Dichtungskörper als aus einem gummielastischen Material gefertigter zylindrischer Vollkörper oder als zylindrischer Balg ausgeführt ist. Die Zylinderform ist dabei im unbelasteten Zustand gegeben. Unter Belastung wird der Dichtungskörper zusammengedrückt und verformt.

Nachfolgend werden verschiedene Ausführungsbeispiele der Erfindung anhand der Figuren der beiliegenden Zeichnungen beschrieben.
Die Fig. 1 zeigt einen Längsschnitt durch den Kolben und die Zylinder einer erfindungsgemäßen Brems- und Dämpfeinrichtung in der Bereitschaftsstellung,
die Fig. 2 und die Fig. 3 zeigt je einen Längsschnitt durch die Kolben und den Zylinder der Fig. 1, wobei die Kolben während des Bremsweges gezeigt sind, und
die Fig. 4 zeigt einen Längsschnitt durch die Kolben und den Zylinder, wobei die Kolben am Ende des Bremsweges gezeigt sind,
Fig. 5 zeigt einen Längsschnitt durch die Kolben und den Zylinder, wobei die Kolben in der Rückholphase gezeigt sind,
die Fig. 6 zeigt einen Längsschnitt durch einen Zylinderkolbeneinheit gemäß einem weiteren Ausführungsbeispiel der Erfindung,
die Fig. 7 zeigt den Abschnitt A der Fig. 6, wobei der Kolben in der Dämpfstellung gezeigt ist,
die Fig. 8 zeigt den Abschnitt A der Fig. 6, wobei ein weiteres Ausführungsbeispiel eines Kolbens in der Dämpfstellung gezeigt ist,
die Fig. 9 zeigt den selben Ausschnitt wie Fig. 7, wobei der Kolben in der Bereitschafts- oder Rückholstellung gezeigt wird, und
die Fig. 10 zeigt den selben Ausschnitt wie die Fig. 8, wobei der Kolben wiederum in der Bereitschafts- oder Rückholstellung gezeigt wird.

Die erfindungsgemäße Brems- und Dämpfeinrichtung weist einen Zylinder 1 auf, in dem ein Kolben 2 linear verschiebbar angeordnet ist. Der Kolben 2 ist dabei mit einer Kolbenstange 3 versehen. Die Kolbenstange 3 bildet einen Stößel, der vorzugsweise vom bewegbaren Möbelteil beaufschlagt wird. Beispielsweise ist der Zylinder 1 an einer Möbelseitenwand oder am Ober- oder Unterboden eines Möbels befestigt, und zwar derart, daß eine geschlossene Türe oder die Blende einer geschlossenen Schublade am Kopf 4 der Kolbenstange 3 anstößt.

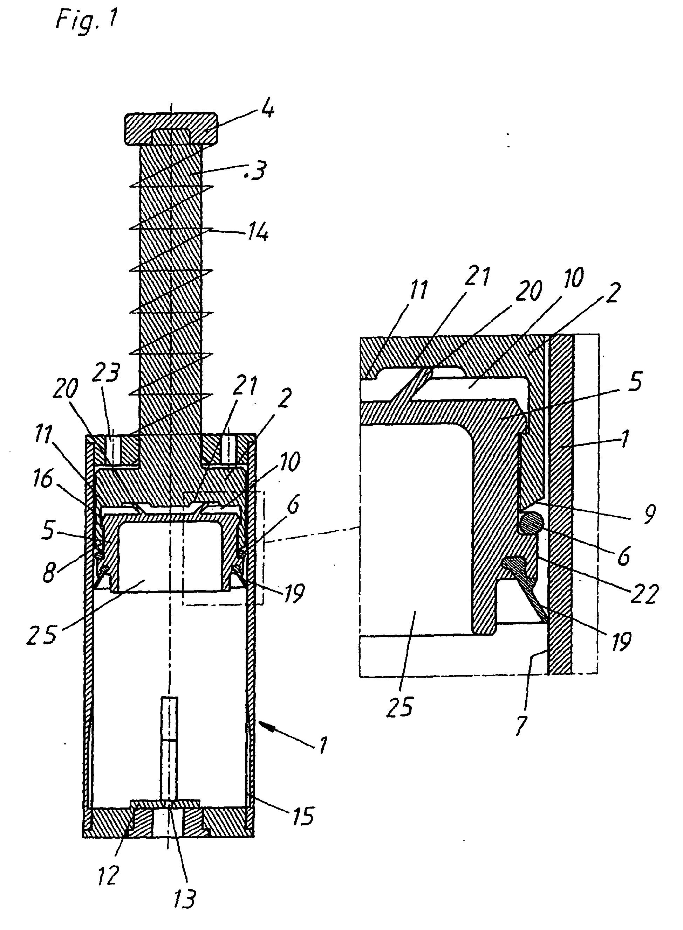

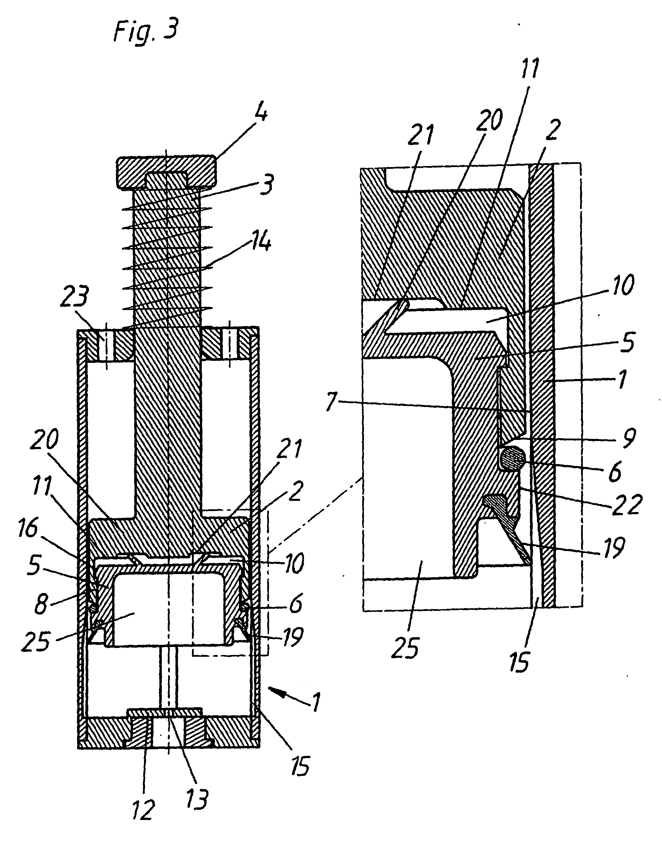

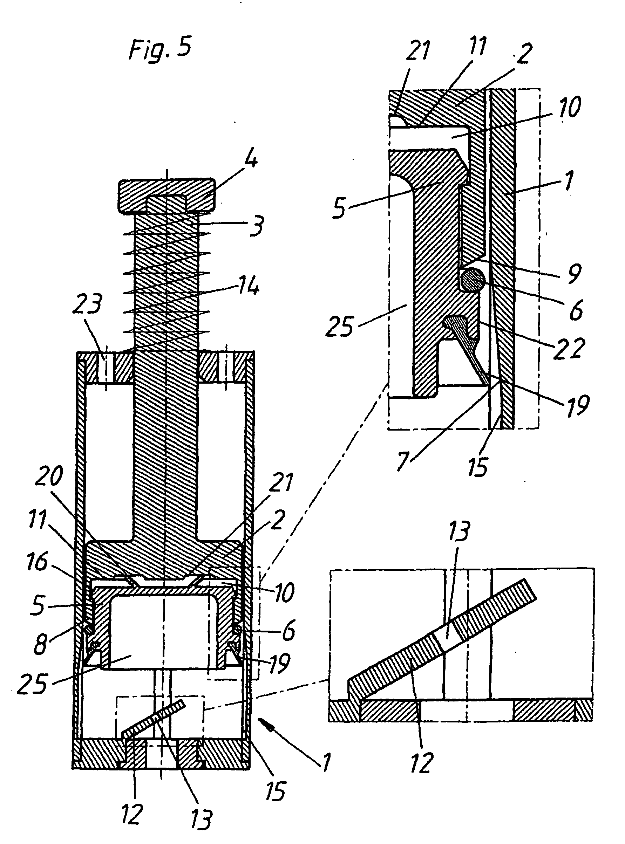

Im Ausführungsbeispiel nach den Fig. 1 bis 5 ist der Kolben 2 mit einem stirnseitig offenen Hohlraum 10 versehen, in den ein zweiter Kolben 5 eingesetzt ist.

Der erste Kolben 2 weist innen einen Ringvorsprung 8 auf, der als Anschlag für die Wegbegrenzung des zweiten Kolbens 5 dient. Der Anschlag bei der relativen Rückwärtsbewegung des Kolbens 5 wird vom Boden 11 des Hohlraumes 10 im Kolben 2 gebildet.

Der Kolben 5 ist ebenso mit einem Ringvorsprung 16 versehen, der einen Gegenanschlag bildet und in der vordersten Stellung des Kolbens 5 in bezug auf den Kolben 2 am Ringvorsprung 8 anliegt.

Der Kolben 5 ist beispielsweise aus einem Kunststoff gefertigt und an der Rückseite des Kolbens 5 ist mindestens ein Abstandhalter 20 angeformt, der sich in mindestens einer Aussparung 21 im Boden 11 des Hohlraumes 10 im Kolben 2 abstützt.

Die Stirnfläche 9 des ersten Kolbens 2 ist schräg ausgebildet und verläuft von der Mitte der Kolben 2, 5 gesehen zur Zylinderwand 7 schräg nach hinten.

Die Bereitschaftsstellung der erfindungsgemäßen Brems- und Dämpfeinrichtung ist in der Fig. 1 gezeigt. Die Kolben 2, 5 befinden sich am oberen Ende des Zylinders 1.

Die Bezeichnung "oben" bezieht sich hier auf die Figuren der Zeichnungen.

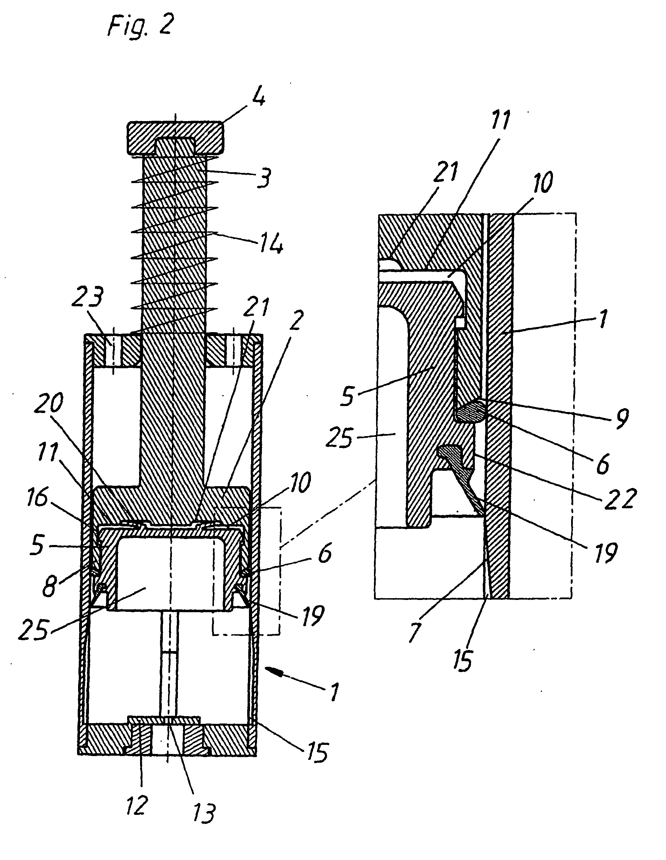

Der Kolben 5 wird vom Abstandhalter 20 im Abstand vom Boden 11 des Hohlraumes 10 gehalten und der als Dichtring 6 ausgebildete Dichtungskörper liegt mit einem gewissen Spiel zwischen der Stirnfläche 9 des Kolbens 2 und einen Ringvorsprung 22 des Kolbens 5. Schlägt eine Möbeltüre oder eine Schubladenblende am Kopf 4 der Kolbenstange 3 an, werden die Kolben 2, 5 im Zylinder 1 nach unten geschoben und der Abstandhalter 20 wird, wie aus der Fig. 2 ersichtlich, niedergedrückt.

Dabei wird der Dichtring 6 gequetscht, im Querschnitt verformt und an die Innenwand 7 des Zylinders 1 gedrückt.

Die Zylinderwand 7 ist mit in axialer Richtung verlaufenden Rillen 15 versehen, die den Durchtritt von Luft ermöglichen, wenn sich der Kolben 2 in der vordersten Stellung befindet.

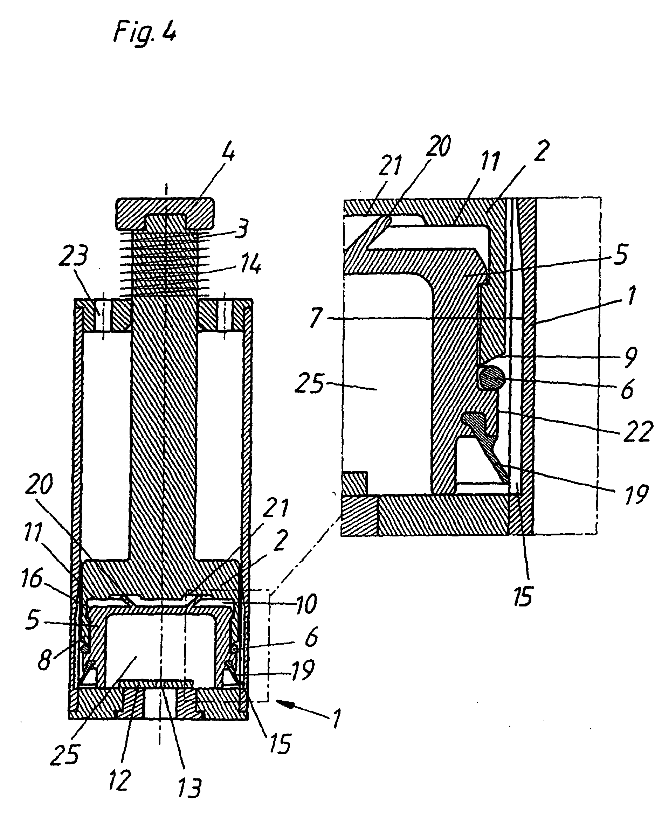

Dabei werden die Kolben 2, 5 vom Abstandhalter 20 wieder auseinander gedrückt (siehe Fig. 4).

Der Kolben 5 ist mit einer Schürze 19 aus einem gummiartigen oder elastomeren Material versehen, der vorzugsweise an der Innenwand 7 des Zylinders 2 streift.

Der Zylinder 1 weist an der Rückseite des Kolbens 2 Lufteintrittsöffnungen 23 und an der Vorderseite ein Rückschlagventil 12 mit einer Durchlaßöffnung 13 auf.

Während der Dämpfung kann die Luft nur langsam durch die relativ kleine Öffnung 13 entweichen.

Werden die Kolben 2, 5 von der Feder 14 zurückgezogen, d.h. wieder in die Bereitschaftsstellung gebracht, so öffnet sich das Rückschlagventil 12 und Luft oder ein anderes Fluid kann ungehindert in den Zylinder 1 einströmen.

Im gezeigten Ausführungsbeispiel ist auch der zweite Kolben 5 mit einem stirnseitig offenen Hohlraum 25 versehen.

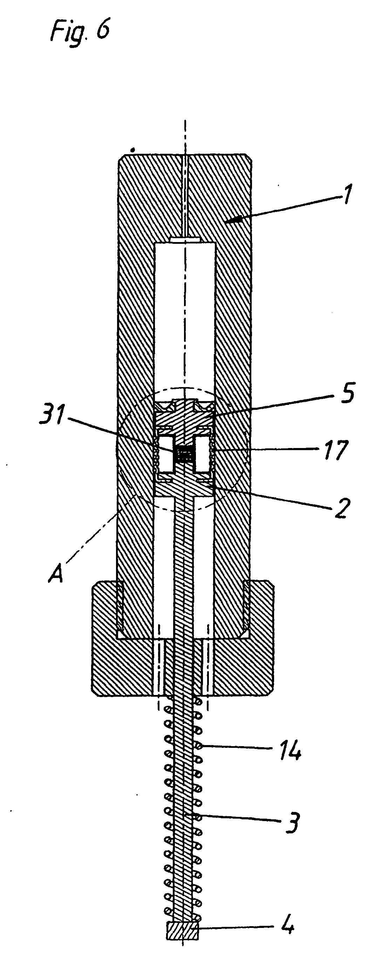

In den Ausführungsbeispielen nach den Fig. 6 bis 10 ist zwischen den Kolben 2, 5 wiederum ein elastisch verformbarer Dichtungskörper angeordnet.

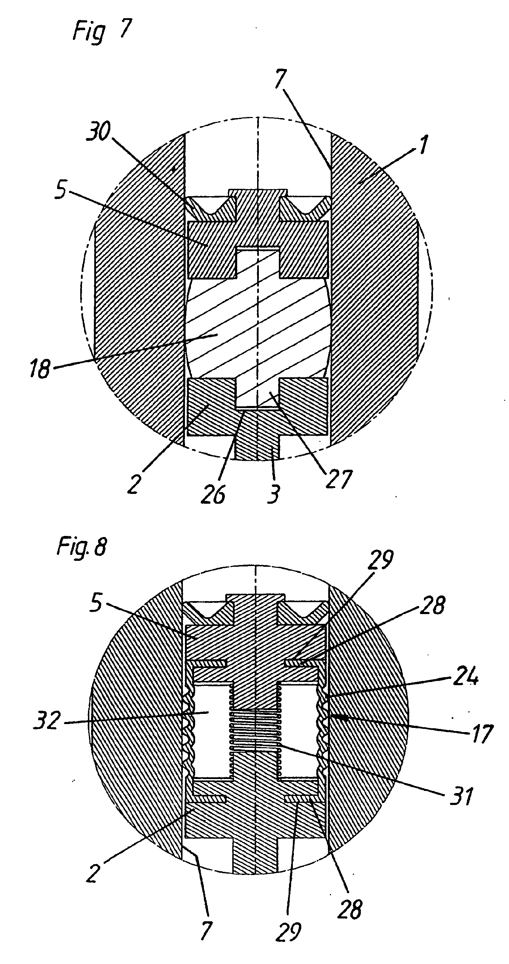

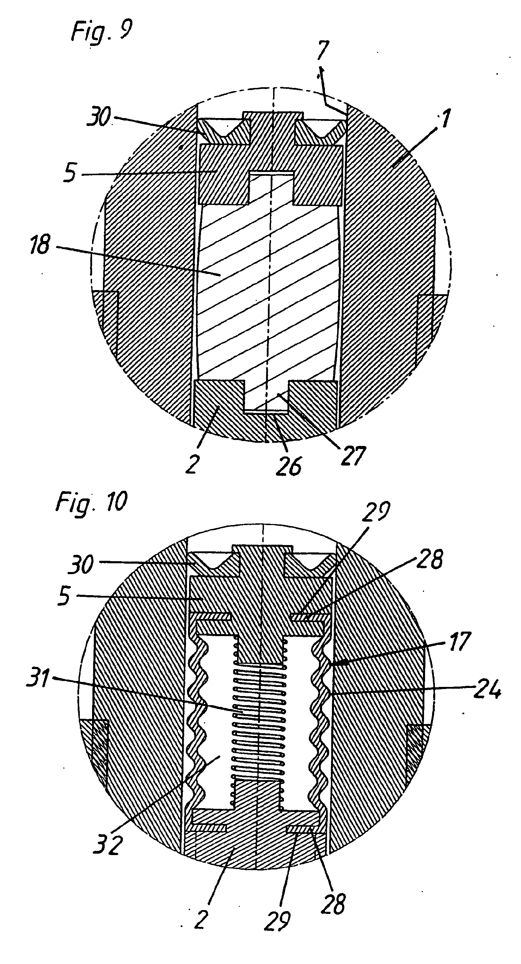

Im Ausführungsbeispiel nach den Fig. 7 und 9 wird der elastisch verformbare Dichtungskörper von einem Vollkörper 18 aus gummielastischem Material gebildet. Dieser Vollkörper 18 weist Vorsprünge 27 auf, mit denen er in Aussparungen 26 im Kolben 2 verankert ist.

Während des Dämpfungsvorgangs, d.h. wenn der Kolben 2 über die Kolbenstange 3 in den Zylinder 1 hineingedrückt wird, wird der Vollkörper 18, wie in der Fig. 7 gezeigt, zwischen dem Kolben 2 und dem Kolben 5 zusammengedrückt und an die Zylinderwand 7 gepreßt, wodurch zusätzlich zur Dämpfung durch das Fluid eine Dämpfung durch Reibung erfolgt.

Der Kolben 5 ist mit einer Dichtung 30 versehen, die an der Zylinderwand 7 anliegt. Dadurch wird der Fluidwiderstand im Zylinder 1 vergrößert.

Im Ausführungsbeispiel nach den Fig. 8 und 10 ist anstelle eines Vollkörpers 18 ein Balg 17 vorgesehen.

Der Balg 17 weist abgewinkelte Ränder 28 auf, mit denen er in Schlitzen 29 der Kolben 2, 5 verankert ist.

Im Ausführungsbeispiel nach den Fig. 6, 8 und 10 ist zwischen den Kolben 2, 5 eine Schraubendruckfeder 31 vorgesehen, die die Kolben 2, 5 nach erfolgter Dämpfung wieder auseinanderdrückt.

Im vom Balg 17 umschlossenen Hohlraum 32 kann sich eine Hydraulikflüssigkeit beispielsweise in Öl befinden.

Der Balg 17 ist an seiner Außenseite mit ringförmigen Rippen 24 versehen, die die Haftung des Balges 17 an der Zylinderwand 7 verbessern.

Während des Dämpfungsvorgangs werden die Kolben 2, 5 wie in der Fig. 10 gezeigt zusammengedrückt und der Balg 17 wird verstärkt an die Zylinderwand 7 gepreßt, wodurch wiederum der Effekt der zusätzlichen Dämpfung durch Reibung hervorgerufen wird.

Der erfindungsgemäße Dämpfer ist vorzugsweise als pneumatischer Dämpfer, beispielsweise als Luftdämpfer ausgeführt, er könnte jedoch auch als hydraulischer Dämpfer zum Einsatz kommen.

## Patentansprüche

1. Brems- und Dämpfeinrichtung, insbesondere für bewegbare Möbelteile mit einem Fluid-Zylinder (1), in dem ein erster Kolben (2) über eine Kolbenstange (3) linear verschiebbar ist, mit einem elastisch verformbaren Dichtungskörper, der bei der Dämpfung an die Zylinderwand (7) gedrückt wird, **dadurch gekennzeichnet, daß** ein zweiter Kolben (5) vorgesehen ist, der mit einer Dichtung (19, 30) versehen ist, die mit der Zylinderwand (7) des Zylinders (1) abdichtet, wobei zwischen den beiden Kolben (2, 5) der elastisch verformbare Dichtungskörper (6, 17, 18) angeordnet ist, der bei der Dämpfung zwischen den beiden Kolben (2, 5) zusammengedrückt, dabei verformt und an die Zylinderwand (7) gedrückt wird, wodurch zusätzlich zu einer Dämpfung durch ein Fluid eine Dämpfung durch Reibung erfolgt.

2. Brems- und Dämpfeinrichtung nach Anspruch 1, **dadurch gekennzeichnet, daß** der erste Kolben (2), der über eine Kolbenstange (3) linear verschiebbar ist, einen stirnseitig offenen Hohlraum (10) aufweist, in den der zweite Kolben (5) eingesetzt ist, wobei der zweite Kolben (5) im ersten Kolben (2) frei verschiebbar gelagert ist und am äußeren Mantel einen Ringvorsprung (22) aufweist, der sich vor dem ersten Kolben (2) befindet, und zwischen dem Ringvorsprung (22) und der Stirnfläche (9) des ersten Kolbens (2) der als Dichtring (6) ausgebildete Dichtungskörper angeordnet ist.

3. Brems- und Dämpfeinrichtung nach Anspruch 2, **dadurch gekennzeichnet, daß** die Stirnfläche (9) des ersten Kolbens (2) vom zweiten Kolben (5) zur Innenwand (7) des Zylinders (1) nach hinten geneigt ist.

4. Brems- und Dämpfeinrichtung nach Anspruch 2 oder 3, **dadurch gekennzeichnet, daß** im Hohlraum (10) des ersten Kolbens (2) Anschläge vorgesehen sind, die den Verschiebeweg des zweiten Kolbens (5) begrenzen.

5. Brems- und Dämpfeinrichtung nach einem der Ansprüche 2 bis 4, **dadurch gekennzeichnet, daß** der zweite Kolben (5) mit einer Dichtung (19) in der Form einer ringförmigen Schürze versehen ist.

6. Brems- und Dämpfeinrichtung nach Anspruch 5, **dadurch gekennzeichnet, daß** die Dichtung (19) aus einem gummielastischen Material gefertigt ist.

7. Brems- und Dämpfeinrichtung nach Anspruch 5 oder 6, **dadurch gekennzeichnet, daß** die Dichtung (19) an der Innenwand (7) des Zylinders (1) streift.

8. Brems- und Dämpfeinrichtung nach einem der Ansprüche 2 bis 7, **dadurch gekennzeichnet, daß** zwischen dem Boden (11) des Hohlraumes (10) des ersten Kolbens (2) und der Rückseite des zweiten Kolbens (5) mindestens ein elastischer Abstandhalter (20) vorgesehen ist.

9. Brems- und Dämpfeinrichtung nach Anspruch 8, **dadurch gekennzeichnet, daß** der zweite Kolben (5) aus Kunststoff gefertigt und der mindestens eine Abstandhalter (20) an der Rückseite des zweiten Kolbens (5) angeformt ist.

10. Brems- und Dämpfeinrichtung nach Anspruch 8 oder 9, **dadurch gekennzeichnet, daß** im Boden (11) des Hohlraumes (10) des ersten Kolbens (2) mindestens eine Aussparung (21) für den mindestens einen Abstandhalter (20) vorgesehen ist.

11. Brems- und Dämpfeinrichtung nach einem der Ansprüche 1 bis 10, **dadurch gekennzeichnet, daß** an der Innenseite der Wand des Zylinders (1) in axialer Richtung verlaufende Rillen (15) vorgesehen sind, die den Durchtritt des pneumatischen Mediums, beispielsweise der Luft, gestatten, wenn sich der erste und der zweite Kolben (2, 5) in ihrer vorderen Endstellung befinden.

12. Brems- und Dämpfeinrichtung nach Anspruch 1, **dadurch gekennzeichnet, daß** der Dichtungskörper als Vollkörper (18) aus einem gummielastischen Material gefertigt ist, das den ersten und den zweiten Kolben (2, 5) verbindet.

13. Brems- und Dämpfeinrichtung nach einem der Ansprüche 1 bis 12, **dadurch gekennzeichnet, daß** der elastisch verformbare Dichtungskörper als zylindrischer Balg (17) ausgeführt ist.

14. Brems- und Dämpfeinrichtung nach Anspruch 13, **dadurch gekennzeichnet, daß** der zylindrische Balg (17) mehrere in Umfangrichtung verlaufende Rippen (24) aufweist, die an der Zylinderwand (7) dichtend anliegen.

15. Brems- und Dämpfeinrichtung nach Anspruch 13 oder 14, **dadurch gekennzeichnet, daß** der Balg (17) eine hydraulische Flüssigkeit enthält.

16. Brems- und Dämpfeinrichtung nach einem der Ansprüche 1 bis 15, **dadurch gekennzeichnet, daß** zwischen den zwei starren Kolben (2, 5) eine Druckfeder (31) eingesetzt ist.

17. Brems- und Dämpfeinrichtung nach einem der Ansprüche 13 bis 16, **dadurch gekennzeichnet, daß** der Balg (17) im ersten und im zweiten Kolben (2, 5) mit Formschluß verankert ist.

18. Brems- und Dämpfeinrichtung nach Anspruch 12, **dadurch gekennzeichnet, daß** der erste und der zweite Kolben (2, 5) stirnseitige Aussparungen (26) aufweisen, in denen Vorsprünge (27) des verformbaren Dichtungskörpers aufgenommen sind.

19. Brems- und Dämpfeinrichtung nach einem der Ansprüche 1 bis 18, **dadurch gekennzeichnet, daß** sie als pneumatische Dämpfeinrichtung ausgeführt ist.

20. Brems- und Dämpfeinrichtung nach Anspruch 19, **dadurch gekennzeichnet, daß** sie als Luftdämpfer ausgeführt ist.

21. Brems- und Dämpfeinrichtung nach einem der Ansprüche 1 bis 18, **dadurch gekennzeichnet, daß** sie als hydraulische Dämpfeinrichtung ausgeführt ist.

22. Brems- und Dämpfeinrichtung nach einem der Ansprüche 1 bis 21, **dadurch gekennzeichnet, daß** der Fluid-Zylinder (1) an der Rückseite des ersten Kolbens (2) Lufteintrittsöffnungen (23) aufweist.

23. Brems- und Dämpfeinrichtung nach einem der Ansprüche 1 bis 22, **dadurch gekennzeichnet, daß** der Fluid-Zylinder (1) vor dem ersten und dem zweiten Kolben (2, 5) ein Rückschlagventil (12) aufweist.

24. Verwendung einer Brems- und Dämpfeinrichtung nach einem der Ansprüche 1 bis 23, **dadurch gekennzeichnet, daß** die Brems- und Dämpfeinrichtung zum Dämpfen und Bremsen der Bewegung eines beweglichen Möbelteils eingesetzt wird.

## Claims

1. A braking and damping device, in particular for movable pieces of furniture, having a fluid cylinder (1) in which a first piston (2) is linearly displaceable via a piston rod (3) and with an elastically deformable sealing member, which, when damping occurs, is pressed against the cylinder wall (7), **characterised in that** a second piston (5) is provided, which is provided with a sealing (19, 30) which seals up with the cylinder wall (7) of the cylinder (1), wherein between the two pistons (2, 5) the elastically deformable sealing member (6, 17, 18) is arranged, which, when damping occurs, is squeezed between the two pistons (2, 5), thereby being deformed and pressed against the cylinder wall (7), whereby in addition to a damping by a fluid, a damping by friction occurs.

2. A braking and damping device according to claim 1, **characterised in that** the first piston (2) which is linearly displaceable via a piston rod (3) has an open cavity (10) at the front thereof into which the second piston (5) is introduced, wherein the second piston (5) is mounted in the first piston (2) in a freely displaceable manner and having on its outer casing an annular projection (22) which is disposed in front of the first piston (2), and between the annular projection (22) and the front face (9) of the first piston (2) the sealing member is arranged, which is in the form of a sealing ring (6).

3. A braking and damping device according to claim 2, **characterised in that** the front face (9) of the first piston (2) is inclined rearwardly from the second piston (5) towards the inner wall (7) of the cylinder (1).

4. A braking and damping device according to claim 2 or 3, **characterised in that** in the cavity (10) of the first piston (2) stops are provided which delimit the path of displacement of the second piston (5).

5. A braking and damping device according to one of claims 2 to 4, **characterised in that** the second piston (5) is provided with a sealing (19) in the form of an annular apron.

6. A braking and damping device according to claim 5, **characterised in that** the sealing (19) consists of a rubber elastic material.

7. A braking and damping device according to claim 5 or 6, **characterised in that** the sealing (19) skims over the inner wall (7) of the cylinder (1).

8. A braking and damping device according to one of claims 2 to 7, **characterised in that** provided between the bottom (11) of the cavity (10) of the first piston (2) and the rear side of the second piston (5) is at least one elastic spacer (20).

9. A braking and damping device according to claim 8, **characterised in that** the second piston (5) is made of plastic material and the at least one spacer (20) is formed on the rear side of the second piston (5).

10. A braking and damping device according to claim 8 or 9, **characterised in that** provided in the bottom (11) of the cavity (10) of the first piston (2) is at least one recess (21) for the at least one spacer (20).

11. A braking and damping device according to one of the claims 1 to 10, **characterised in that** provided on the inner wall of the cylinder (1) are axially extending grooves (15), which permit the passage of the pneumatic medium, for example air, when the first and second piston (2, 5) are disposed in their front end position.

12. A braking and damping device according to claim 1, **characterised in that** the sealing member is in the form of a solid body (18) and manufactured from a rubber elastic material which connects the first and the second piston (2, 5).

13. A braking and damping device according to one of claims 1 to 12, **characterised in that** the elastically deformable sealing member is designed as a cylindrical bellows (17).

14. A braking and damping device according to claim 13, **characterised in that** the cylindrical bellows (17) has a plurality of peripherally extending ribs (24) which lie sealingly against the cylinder wall (7).

15. A braking and damping device according to claim 13 or 14, **characterised in that** the bellows (17) contains a hydraulic fluid.

16. A braking and damping device according to one of claims 1 to 15, **characterised in that** inserted between the two rigid pistons (2, 5) is a compression spring (31).

17. A braking and damping device according to one of claims 13 to 16, **characterised in that** the bellows (17) is anchored with a positive fit in the first and second piston (2, 5).

18. A braking and damping device according to claim 12, **characterised in that** the first and second piston (2, 5) have recesses (26) in their front faces, into which projections (27) of the deformable sealing member are received.

19. A braking and damping device according to one of claims 1 to 18, **characterised in that** it is designed as a pneumatic damping device.

20. A braking and damping device according to claim 19, **characterised in that** it is designed as an air damper.

21. A braking and damping device according to one of claims 1 to 18, **characterised in that** it is designed as a hydraulic damping device.

22. A braking and damping device according to one of claims 1 to 21, **characterised in that** the fluid cylinder (1) is provided with air admittance apertures (23) on the rear side of the first piston (2).

23. A braking and damping device according to one of claims 1 to 22, **characterised in that** the fluid cylinder (1) is provided with a return valve (12) in front of the first and the second piston (2, 5).

24. Use of a braking and damping device according to one of claims 1 to 23, **characterised in that** the braking and damping device is used for damping and braking of the movement of a movable piece of furniture.

## Revendications

1. Dispositif de freinage et d'amortissement, destiné notamment à des parties mobiles de meubles, comportant un vérin à fluide (1) dans lequel un premier piston (2) peut être déplacé linéairement par l'intermédiaire d'une tige de piston (3), et un corps d'étanchéité susceptible de se déformer de façon élastique, qui est appliqué contre la paroi (7) de vérin lors de l'amortissement, **caractérisé en ce qu'**il est prévu un deuxième piston (5) qui est pourvu d'un joint (19, 30), qui assure l'étanchéité de la paroi (7) du vérin (1), le corps d'étanchéité (6, 17, 18) susceptible de se déformer de façon élastique étant agencé entre les deux pistons (2, 5), étant comprimé entre les deux pistons (2, 5) en se déformant lors de l'amortissement, et étant appliqué contre la paroi (7) de vérin, moyen par lequel a lieu un amortissement par frottement en plus d'un amortissement par un fluide.

2. Dispositif de freinage et d'amortissement selon la revendication 1, **caractérisé en ce que** le premier piston (2), qui peut être déplacé linéairement par l'intermédiaire d'une tige de piston (3), comporte un espace creux (10) ouvert en face frontale, dans lequel est inséré le deuxième piston (5), le deuxième piston (5) étant librement mobile dans le premier piston (2), et comportant sur l'enveloppe extérieure une saillie annulaire (22) qui se trouve devant le premier piston (2), et **en ce que** le corps d'étanchéité, qui est agencé sous la forme d'une bague d'étanchéité (6), est disposé entre la saillie annulaire (22) et la face frontale (9) du premier piston (2).

3. Dispositif de freinage et d'amortissement selon la revendication 2, **caractérisé en ce que** la face frontale (9) du premier piston (2) est inclinée à partir du deuxième piston (5) vers la paroi intérieure (7) du vérin (1).

4. Dispositif de freinage et d'amortissement selon la revendication 2 ou 3, **caractérisé en ce que** des butées, qui limitent la course du deuxième piston (5), sont prévues dans l'espace creux (10) du premier piston (2).

5. Dispositif de freinage et d'amortissement selon l'une des revendications 2 à 4, **caractérisé en ce que** le deuxième piston (5) est pourvu d'un joint (19) sous la forme d'une jupe annulaire.

6. Dispositif de freinage et d'amortissement selon la revendication 5, **caractérisé en ce que** le joint (19) est constitué d'un matériau élastique de type caoutchouc.

7. Dispositif de freinage et d'amortissement selon la revendication 5 ou 6, **caractérisé en ce que** le joint (19) s'applique contre la paroi intérieure (7) du vérin (1).

8. Dispositif de freinage et d'amortissement selon l'une des revendications 2 à 7, **caractérisé en ce qu'**au moins un écarteur élastique (20) est prévu entre le fond (11) de l'espace creux (10) du premier piston (2) et la face arrière du deuxième piston (5).

9. Dispositif de freinage et d'amortissement selon la revendication 8, **caractérisé en ce que** le deuxième piston (5) est réalisé en matière plastique, et **en ce que** l'au moins un écarteur (20) est formé sur la face arrière du deuxième piston (5).

10. Dispositif de freinage et d'amortissement selon la revendication 8 ou 9, **caractérisé en ce qu'**au moins un évidement (21) pour l'au moins un écarteur (20) est prévu dans le fond (11) de l'espace creux (10) du premier piston (2).

11. Dispositif de freinage et d'amortissement selon l'une des revendications 1 à 10, **caractérisé en ce que** des cannelures (15) s'étendant dans la direction axiale sont prévues sur la face intérieure de la paroi du vérin (1), lesquelles permettent le passage du fluide pneumatique, par exemple de l'air, lorsque les premier et deuxième pistons (2, 5) se trouvent dans leur position finale avant.

12. Dispositif de freinage et d'amortissement selon la revendication 1, **caractérisé en ce que** le corps d'étanchéité est réalisé sous la forme d'un corps plein (18) en un matériau élastique de type caoutchouc, qui relie les premier et deuxième pistons (2, 5).

13. Dispositif de freinage et d'amortissement selon l'une des revendications 1 à 12, **caractérisé en ce que** le corps d'étanchéité susceptible de se déformer de façon élastique est réalisé sous la forme d'un soufflet cylindrique (17).

14. Dispositif de freinage et d'amortissement selon la revendication 13, **caractérisé en ce que** le soufflet cylindrique (17) comporte plusieurs nervures (24) s'étendant dans la direction périphérique, qui s'appliquent de façon étanche contre la paroi (7) de vérin.

15. Dispositif de freinage et d'amortissement selon la revendication 13 ou 14, **caractérisé en ce que** le soufflet (17) contient un liquide hydraulique.

16. Dispositif de freinage et d'amortissement selon l'une des revendications 1 à 15, **caractérisé en ce qu'**un ressort de compression (31) est inséré entre les deux pistons (2, 5) rigides.

17. Dispositif de freinage et d'amortissement selon l'une des revendications 13 à 16, **caractérisé en ce que** le soufflet (17) est ancré par complémentarité de formes dans le premier et dans le deuxième piston (2, 5).

18. Dispositif de freinage et d'amortissement selon la revendication 12, **caractérisé en ce que** le premier et le deuxième piston (2, 5) comportent des évidements frontaux (26), dans lesquels sont logées des saillies (27) du corps d'étanchéité susceptible de se déformer.

19. Dispositif de freinage et d'amortissement selon l'une des revendications 1 à 18, **caractérisé en ce qu'**il est réalisé sous la forme d'un dispositif d'amortissement pneumatique.

20. Dispositif de freinage et d'amortissement selon la revendication 19, **caractérisé en ce qu'**il est réalisé sous la forme d'un amortisseur à air.

21. Dispositif de freinage et d'amortissement selon l'une des revendications 1 à 18, **caractérisé en ce qu'**il est réalisé sous la forme d'un dispositif d'amortissement hydraulique.

22. Dispositif de freinage et d'amortissement selon l'une des revendications 1 à 21, **caractérisé en ce que** le vérin à fluide (1) comporte des orifices d'entrée d'air (23) sur la face arrière du premier piston (2).

23. Dispositif de freinage et d'amortissement selon l'une des revendications 1 à 22, **caractérisé en ce que** le vérin à fluide (1) comporte un clapet anti-retour (12) en amont du premier et du deuxième piston (2, 5).

24. Utilisation d'un dispositif de freinage et d'amortissement selon l'une des revendications 1 à 23, **caractérisé en ce que** le dispositif de freinage et d'amortissement est utilisé pour l'amortissement et le freinage du mouvement d'une partie mobile de meuble.
